## Europäisches Patentamt

## European Patent Office

## Office européen des brevets

(11) Veröffentlichungsnummer: **0 144 556**
**B1**

(12) **EUROPÄISCHE PATENTSCHRIFT**

(45) Veröffentlichungstag der Patentschrift:
**29.06.88**

(21) Anmeldenummer: **84110650.3**

(22) Anmeldetag: **07.09.84**

(51) Int. Cl.⁴: **H 02 J 3/18,** G 05 F 1/70,
H 02 M 5/257

(54) **Blindleistungskompensator zur Kompensation einer Blindstromkomponente in einem Wechselspannungsnetz.**

(30) Priorität: **12.10.83 CH 5548/83**

(43) Veröffentlichungstag der Anmeldung:
**19.06.85 Patentblatt 85/25**

(45) Bekanntmachung des Hinweises auf die Patenterteilung:
**29.06.88 Patentblatt 88/26**

(84) Benannte Vertragsstaaten:
**AT CH DE FR GB LI SE**

(73) Patentinhaber: **BBC Aktiengesellschaft Brown, Boveri & Cie., Haselstrasse, CH- 5401 Baden (CH)**

(72) Erfinder: **Stemmler, Herbert, Dr., Ahornweg 16, CH- 5416 Kirchdorf (CH)**

(56) Entgegenhaltungen:
**DE-B-2 643 934**

**IEEE TRANSACTIONS ON INDUSTRIAL ELECTRONICS AND CONTROL INSTRUMENTATION, Band IECI-23, Nr. 2, Mai 1976, Seiten 162-166, New York, USA; F. HARASHIMA u.a.: "A closed-loop control system for the reduction of reactive power required by electronic converters"**

**IEEE TRANSACTIONS ON INDUSTRY APPLICATIONS, Band IA-15, Nr. 5, September/Oktober 1979, Seiten 521-532, IEEE, New York, US; L. GYUGYI: "Reactive power generation and control by thyristor circuits" Heumann/Stumpe "Thyristoren, Eigenschaften und Anwendungen" 3. Auflage, Stuttgart 1974, Seite 170/171**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Blindleistungskompensator zur Kompensation einer Blindstromkomponente in einem Wechselspannungsnetz gemäss dem Oberbegriff des Patentanspruchs 1.

Der zunehmende Einsatz von elektrischen Maschinen und Anlagen mit erhöhtem Blindstromverbrauch, z. B. Lichtbogenöfen, Asynchronmaschinen, Phasenanschnittsteuerungen, führt zu einem Ansteigen des Blindleistungsbedarfs auf der Verbraucherseite des Stromversorgungsnetzes. Dadurch wird einerseits das Versorgungsnetz zusätzlich belastet und andererseits die Ausregelung von Spannungsschwankungen im Netz erschwert.

Um diese unerwünschten Auswirkungen zu vermeiden oder wenigstens auf ein tolerierbares Mass zu reduzieren, geht man mehr und mehr dazu über, den Blindstrom an seinem Ursprungsort, d. h. beim Verbraucher selbst, zu kompensieren. Die dezentrale Art der Blindstromkompensation erfordert eine Vielzahl von Blindleistungskompensatoren, die neben einer möglichst kurzen Regelzeit vor allem einen einfachen und damit kostengünstigen Aufbau aufweisen und zudem eine stufenlose Kompensation der auftretenden induktiven oder kapazitiven Blindströme ermöglichen.

Als Blindleistungskompensatoren werden heutzutage üblicherweise Kombinationen aus geschalteten Kondensatorbatterien (TSC: thyristor switched capacitor) und regelbaren Induktivitäten (TCR: thyristor controlled reactance) verwendet. Die Leistung der Kondensatorbatterie ist dabei nach der maximalen, am Verbraucher auftretenden, induktiven Blindleistung bemessen. Da die Kondensatorbatterie nur stufenweise zu- bzw. abgeschaltet werden kann, wird der zwischen den Stufen liegende Blindleistungsbereich durch die regelbare Induktivität erschlossen (DE-OS-1 932 272). Bei dieser Art der Blindleistungskompensation steigt der Aufwand für die zu installierende Kondensatorbatterie mit zunehmender Blindleistung des Verbrauchers, so daß bei hoher Blindleistung mit erheblichen Kosten für den Kompensator gerechnet werden muß.

Mit dem Oberbegriff nimmt die Erfindung auf einen Stand der Technik von Blindstromkompensatoren Bezug, wie er aus den IEEE Transactions, Band IECI-23, Nr. 2, Mai 1976, S. 162 - 166 bekannt ist. Dort wird von einem geregelten, thyristorbestückten, zwangskommutierten Inverter als Blindstromquelle mit eingangsseitigem Filterkondensator und ausgangsseitiger Gleichstromdrossel ein pulsbreitenmodulierter Kompensationsstrom erzeugt. Die Impulsfrequenz des Inverters liegt im Bereich von 1 kHz - 2,5 kHz. Der Kompensationsstrom ist nicht nur von der Grundschwingung der Blindstromkomponente auf Grund einer Phasenverschiebung im Verbraucherkreis, sondern auch von Oberschwingungs-Blindströmen abhängig. Zur Bildung des Momentanwertes der Blindleistung als Steuersignal für die Thyristoren des Inverters werden Laststrom und Netzspannung pultipliziert. Anschließend wird das Produktsignal während einer Halbschwingung der Netzfrequenz integriert und, nach Zwischenspeicherung in einer Sample-and-Hold-Schaltung während der an die Integration anschließenden Halbschwingung, mit der Netzspannung multipliziert. Von diesem Produkt wird der Laststrom subtrahiert. Die Reaktionszeit einer Halbschwingung der Netzfrequenz ist für schnelle Laständerungen, wie sie z. B. bei Schmelzöfen auftreten, nicht immer ausreichend.

Die Erfindung, wie sie im Patentanspruch 1 definiert ist, löst die Aufgabe, einen Blindleistungskompensator zur Kompensation einer Blindstromkomponente in einem Wechselspannungsnetz so auszubilden, daß er auch bei schnelleren Laständerungen eine ausreichende Kompensation und gleichzeitig einen geringen Oberschwingungsanteil im Blindstrom gewährleistet.

Ein Vorteil der Erfindung besteht in der kürzeren Reaktionszeit und in dem dadurch bedingten größeren Anwendungsbereich des Blindleistungskompensators. Für die Bildung der Steuerspannung ist keine Integration über eine bestimmte Zeitdauer erforderlich.

Zum einschlägigen Stand der Technik wird zusätzlich auf das Buch von Heumann/Stumpe: "Thyristoren, Eigenschaften und Anwendungen", 3. Auflage, Stuttgart 1974, S. 170 und 171 verwiesen. Dort sind eingangsseitig an ein gemeinsames Netz angeschlossene und ausgangsseitg getrennte Verbraucher im Gegentakt gesteuert, so daß am Pufferkondensator die doppelte Pulsfrequenz erzeugt wird. Dadurch kann der Pufferkondensator kleiner ausgelegt werden.

Die Erfindung soll nun nachfolgend in Ausführungsbeispielen anhand der Zeichnung näher erläutert werden. Es zeigen:

Fig. 1 das Blockschaltbild eines Ausführungsbeispiels des erfindungsgemäßen Blindstromkompensators,

Fig. 2 die relative Lage der verschiedenen, in der Schaltung nach Fig. 1 auftretenden Ströme und Spannungen im Zeigerdiagramm,

Fig. 3a,b den zeitlichen Ablauf der Ströme und Spannungen aus Fig. 2,

Fig. 3c den zeitlichen Ablauf des längenmodulierten Kompensationsstroms,

Fig. 3d den zeitlichen Ablauf der Steuerung der zwangskommutierten Stromrichterventile für einen Kompensationsstrom nach Fig. 3c,

Fig. 4 den zeitlichen Ablauf der Logikimpulse in einer Ansteuereinheit nach Fig. 1 für einen Kompensationsstrom nach Fig. 3c.

Fig. 5 die Wahrheitstabelle für die logische Verknüpfung der Logikimpulse nach Fig. 4,

Fig. 6 das Ausführungsbeispiel einer Ansteuereinheit nach Fig. 1,

Fig. 7 die Anordnung zweier Stromrichterbrücken mit versetzter Taktung am Drehstromnetz, und

Fig. 8 die Phasenverschiebung der Impulse der Kompensationsströme bei einer versetzten Taktung nach Fig. 7.

Obgleich der Hauptanwendungsbereich des erfindungsgemäßen Blindstromkompensators bei der Kompensation von Blindströmen in dreiphasigen Drehstromnetzen liegt, und daher eine dreiphasige Stromrichterbrücke innerhalb des Kompensators zur Anwendung gelangt, beschränkt sich die nachfolgende Beschreibung im Zusammenhang mit einem Ausführungsbeispiel der Übersichtlichkeit halber auf den einfacheren Fall eines einphasigen Wechselspannungsnetzes. Die Ausführung der Erfindung kann vom Durchschnittsfachmann in einfacher Weise auf den Fall des Drehstromnetzes übertragen werden.

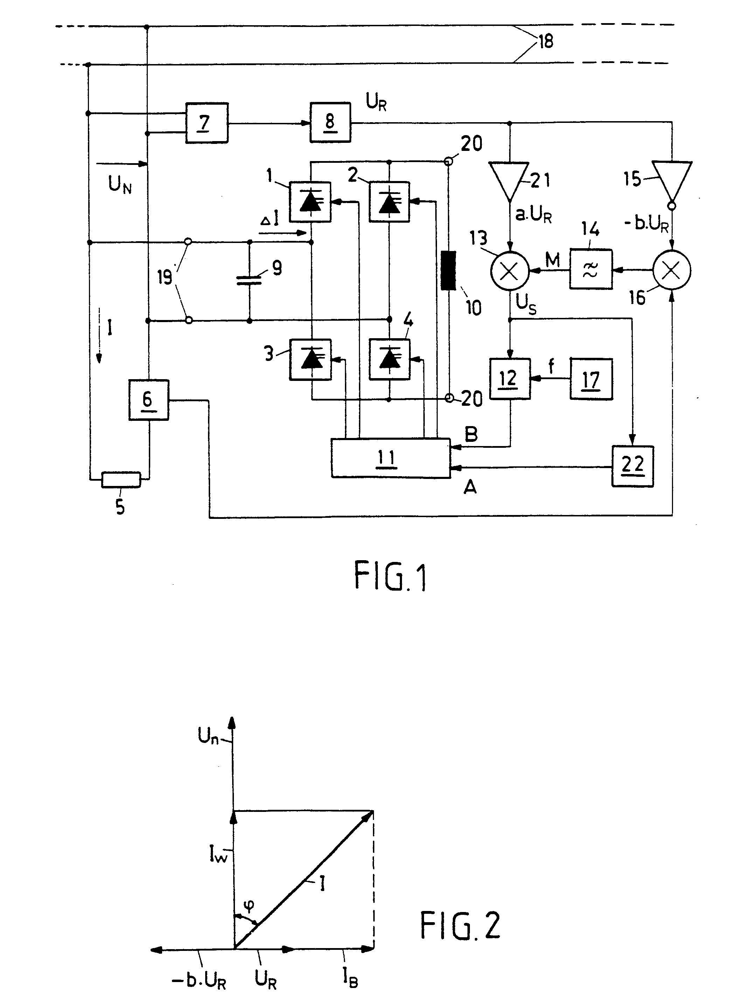

In Fig. 1 ist das Blockschaltbild einer bevorzugten Ausführungsform des erfindungsgemäßen Blindstromkompensators dargestellt. An ein Wechselspannungsnetz 18 mit einer sinusförmigen Netzspannung $U_N$ ist ein Verbraucher 5 angeschlossen, durch den ein ebenfalls sinusförmiger Verbraucherstrom I fließt. Der Verbraucherstrom I ist dabei voraussetzungsgemäß nicht in Phase mit der Netzspannung $U_N$.

Zur Aufnahme der Grössen I und $U_N$ ist in den Zuleitungen zum Verbraucher 5 eine Strommesseinrichtung 6 und parallel zum Verbraucher 5 eine Spannungsmesseinrichtung 7 vorgesehen. Beide Messeinrichtungen sind an sich bekannte Messwandler, wie sie üblicherweise zur Überwachung von Versorgungsnetzen eingesetzt werden und jedem Fachmann geläufig sind.

Ebenfalls parallel zum Verbraucher 5 liegt eine Stromrichter-Brückenschaltung mit zwangskommutierten Stromrichterventilen 1, ..., 4, einem Wechselspannungseingang 19 und einem Gleichstromausgang 20. Die zwangskommutierten Stromrichterventile 1, ..., 4 sind in den einzelnen Brückenzweigen so angeordnet, daß sich am Gleichstromausgang 20 für den dort fließenden Strom eine festgelegte Stromrichtung ergibt. Die Art der Stromrichter-Brückenschaltung wird daher auch als I-Stromrichter bezeichnet.

Der Wechselspannungseingang 19 ist an das Wechselspannungsnetz 18 angeschlossen, der Gleichstromausgang 20 ist dagegen durch eine Glättungsdrossel 10 abgeschlossen. Parallel zum Wechselspannungseingang 19 liegt zusätzlich ein Kondensator 9 zum Schutz der Stromrichterventile 1, ..., 4 bei der Zwangskommutierung.

Die zwangskommutierten Stromrichterventile, 1, ..., 4 sind Stromrichterventile, die entweder als eigenständige Bauelemente oder durch geeignete Zusatzbeschaltung (Kommutierungskreise) unabhängig von der jeweils herrschenden Eingangsspannung an der Brücke an- bzw. abgeschaltet werden können. Besonders vorteilhaft ist hier die Verwendung von Abschaltthyristoren (GTO: gate turn off), weil diese Thyristoren wegen der nicht notwendigen Zusatzbeschaltung einen vereinfachten Aufbau des Blindleistungskompensators ermöglichen.

Die zwangskommutierten Stromrichterventile 1, ..., 4 sind über ihre Steuereingänge mit einer Ansteuereinheit 11 verbunden, die nach einem vorgegebenen Zeitplan geeignete Impulse zum An- und Abschalten der Ventile abgibt. Dieser Zeitplan wird durch eine Abfolge von Logikimpulsen festgelegt, die von einem Pulslängenmodulator 12 und einem Polaritätsdetektor 22 auf Impulseingänge A und B der Ansteuereinheit 11 gelangen. Der Polaritätsdetektor 22 bestimmt die Polarität einer an seinem Eingang liegenden, sinusförmigen Steuerspannung $U_S$ und gibt bei $U_S > 0$ an seinem Ausgang ein der logischen "1" entsprechendes Signal und bei $U_S < 0$ ein der logischen "0" entsprechendes Signal ab. Die Steuerspannung $U_S$ ist gleichzeitig auch die Modulationsspannung für den Pulslängenmodulator 12, dessen Impulsfrequenz f durch einen Impulsfrequenzgenerator 17 vorgegeben wird.

Als Pulslängenmodulator 12 kann eine der aus der Technik der Pulslängenmodulation bekannten Schaltungen verwendet werden, bei der z. B. ein im Pulsfrequenzgenerator 17 erzeugtes Sägezahnsignal der Impulsfrequenz f zu der Modulationsspannung addiert und das Summensignal auf einen Grenzwertdetektor gegeben wird, an dessen Ausgang bei geeignet eingestelltem Grenzwert die längenmodulierten Impulse erscheinen.

Die Steuerspannung $U_S$ ist das Produkt eines Multiplikationsprozesses, bei dem in einem ersten Multiplikator 13 eine verstärkte Referenzspannung $a \cdot U_R$ mit einem Multiplikationsfaktor H multipliziert wird, der je nach Phasenlage des Verbraucherstroms I positive oder negative Werte annimmt. Der Multiplikationsfaktor M ist das Produkt eines weiteren Multiplikationsprozesses, bei dem in einem zweiten Multiplikator 16 eine invertierte Referenzspannung $- b \cdot U_R$ mit dem Ausgangssignal der Strommesseinrichtung 6 multipliziert und das Produkt in einem nach geschalteten Tiefpass 14 auf seinen Gleichspannungsanteil reduziert wird.

Die verstärkte Referenzspannung $a \cdot U_R$ und die invertierte Referenzspannung $-b \cdot U_R$ werden über einen Verstärker 21 bzw. einen invertierenden Verstärker 15 aus einer gemeinsamen Referenzspannung $U_R$ abgeleitet, die aus dem Ausgangssignal der Spannungsmesseinrichtung 7 durch eine 90°-Phasenverschiebung in einem Phasenschieber 8 erzeugt wird. Die Verstärker 15 und 21 ermöglichen die getrennte Einstellung der Referenzspannungen $a \cdot U_R$ und $-b \cdot U_R$ auf Werte, die für die unterschiedliche Weiterverarbeitung der Signale geeignet sind. Der Verstärker 21 kann jedoch auch weggelassen werden.

Die Wirkungsweise des Blindleistungskompensators wird aus der Form und dem zeitlichen Ablauf der verschiedenen Signale und Signalspannungen deutlich, die in der Schaltung nach Fig. 1 auftreten. Zur Erklärung wird angenommen, daß der Verbraucher 5 dem Wechselspannungsnetz 18 induktive Blindleistung entnimmt, d. h. der Verbraucherstrom I der Netzspannung $U_N$ um einen Phasenwinkel $0° < \varphi \leqslant 90°$ nacheilt. Die entsprechenden Strom- und Spannungszeiger sind in dem Zeigerdiagramm der Fig. 2 wiedergegeben. Der Zeiger des Verbraucherstroms 1 ist gegenüber dem Zeiger der Hetzspannung $U_N$ im Uhrzeigersinn um den Phasenwinkel $\varphi$ gedreht. Der Verbaucherstrom I läßt sich vektoriell zerlegen in eine Wirkstromkomponente $I_W$ und eine Blindstromkomponente $I_B$, die durch den Blindleistungskompensator kompensiert werden soll.

Im vorliegenden Fall des nacheilenden Verbraucherstroms I liegt die Blindstromkomponente $I_B$ parallel zum Vektor der sinusförmigen Referenzspannung $U_R$ die durch den Phasenschieber 8 gegen die Netzspannung $U_N$ um 90° verzögert ist. Bei voreilendem Verbraucherstrom I, d. h. bei kapazitiver Blindleistung, liegt der Vektor der Blindstromkomponente $I_B$ dagegen parallel zur invertierten Referenzspannung $-b \cdot U_R$.

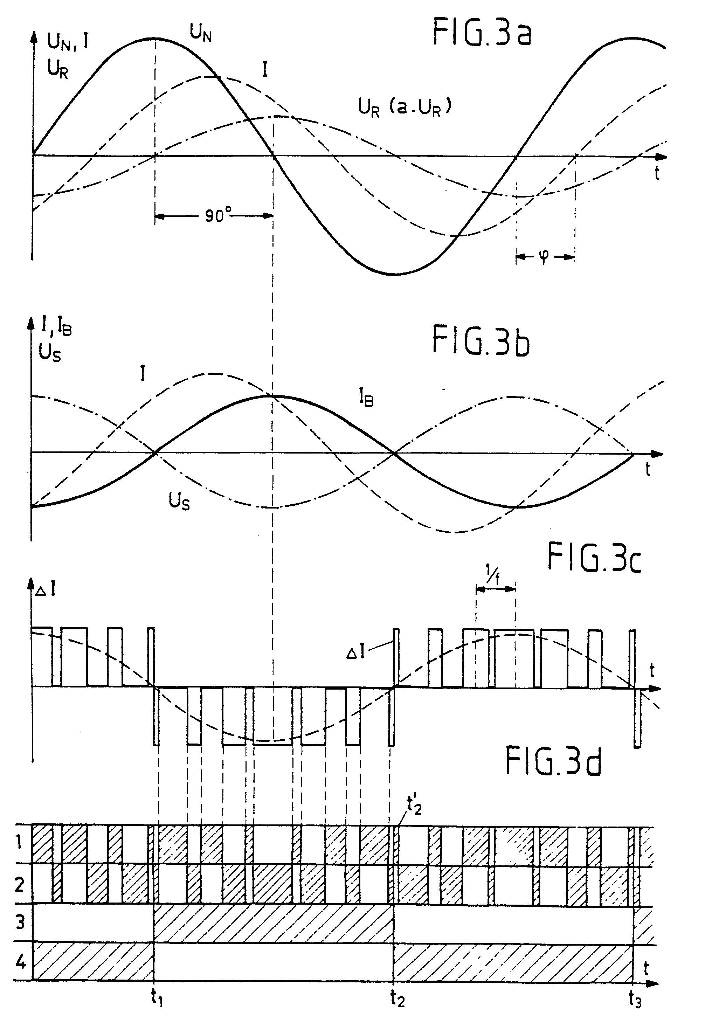

Der zeitliche Ablauf der Spannungen und Ströme ist in den Figuren 3a und 3b dargestellt. Fig. 3a zeigt die Hetzspannung $U_N$ über der Zeit t, den um $\varphi$ nacheilenden Verbraucherstrom I und die um 90° nacheilende Referenzspannung $U_R$. Im gleichen Maßstab ist der Verbraucherstrom I noch einmal in Fig. 3 b aufgetragen, zusammen mit seiner Blindstromkomponente $I_B$ und der für den Pulslängenmodulator 12 benötigten Steuerspannung $U_S$. Die Steuerspannung $U_S$ ist gegenüber der Blindstromkomponente $I_B$ stets um 180° phasenverschoben und daher in Phase mit einem Kompensationsstrom $\Delta I$, der vom Blindleistungskompensator erzeugt werden soll und die Blindstromkomponente $I_B$ gerade kompensiert.

Da sowohl die Referenzspannung $U_R$ als auch die verstärkte Referenzspannung $a \cdot U_R$ eine zeitlich konstante Amplitude besitzen und der Netzspannung $U_N$ phasenstarr um 90° nacheilen, die Blindstromkomponente $I_B$ jedoch im allgemeinen sowohl ihre Amplitude als auch ihre Phasenlage zwischen kapazitiv ( +90° ) und induktiv (-90°) wechselt, wird eine entsprechende Nachführung der Steuerspannung $U_S$ dadurch bewirkt, dass die verstärkte Referenzspannung $a \cdot U_R$ mit dem Multiplikationsfaktor M multipliziert wird, der in seinem Betrag und seinem Vorzeichen veränderlich ist. Bei induktiver Blindstromkomponente $I_B$ erzeugt ein negatives Vorzeichen von M die notwendige Phasenverschiebung von 180° der

Steuerspannung $U_S$ gegenüber $a \cdot U_R$ und $I_B$. Bei kapazitiver Blindstromkomponente lässt ein positives Vorzeichen von M die Phase unverändert, da die notwendige 180°- Verschiebung bereits zwischen $I_B$ und $a \cdot U_R$ vorhanden ist.

Der Betrag von M beeinflußt die Amplitude von $U_S$ und damit über den Pulslängenmodulator 12 auch die Amplitude des resultierenden Kompensationsstroms $\Delta I$. Der Betrag wird daher in Abhängigkeit von der Amplitude der Blindstromkomponente $I_B$ so geregelt, dass sich $\Delta I$ und $I_B$ zu jeder Zeit möglichst genau kompensieren. Hat z. B. die Hetzspannung $U_N$ die zeitabhängige Form:

(1) $U_N = U°_N \sin \omega t$

mit der Amplitude $U°_N$ und der Kreisfrequenz $\omega$, gilt gemäß Fig. 2 für $U_R$, I und $I_B$ entsprechend:

(2) $U_R = U°_R \sin (\omega t - 90°) = -U°_R \cos \omega t$

(3) $I = I° \sin (\omega t \mp \varphi)$

Durch Multiplikation der zugehörigen Signalgrössen aus der Spannungsmesseinrichtung 7 und der Strommesseinrichtung 6 im zweiten Multiplikator 16 erhält man:

(4) $-b \cdot U_R \cdot I = bU°_R I \sin(\omega t \pm \varphi) \cos \omega t$
$= \frac{1}{2} \cdot b \cdot U°_R I° (\sin(2\omega t \pm \varphi) + \sin(\pm +\varphi))$

Nach Unterdrückung des mit der Kreisfrequenz $2\omega$ schwingenden Anteils durch den Tiefpass 14 verbleibt für den Multiplikationsfaktor M der folgende Gleichsignalanteil:

(5) $\frac{1}{2} b \cdot U°_R I° \cdot \sin(\pm \varphi) = \pm \frac{1}{2} bU°_R I° \cdot \sin \varphi$
$= \pm \frac{1}{2} bU°_R I°_B$

mit der Amplitude $I°_B = I° \cdot \sin \varphi$ der Blindstromkomponente $I_B$.

Ein diesem Gleichsignalanteil aus (5) proportionaler Multiplikationsfaktor M besitzt genau die gewünschten Eigenschaften: Er ist bei induktiver Blindstromkomponente (-$\varphi$ ) negativ, bei kapazitiver Blindstromkomponente ( +$\varphi$) positiv, und er ist proportional zur Amplitude $I°_B$ der Blindstromkomponente $I_B$. Die Proportionalitätskonstante ist dabei durch den Übertragungsfaktor der Strommesseinrichtung 6 und des invertierenden Verstärkers 15 in geeigneter Weise einstellbar.

Nach Maßgabe der durch M und $a \cdot U_R$ vor gegebenen Steuerspannung $U_S$ erzeugt die Stromrichter-Brückenschaltung den Kompensationsstrom $\Delta I$ in Form von sinusförmig längenmodulierten Rechteckimpulsen, wie sie in Fig. 3c dargestellt sind. Der zugehörige Ablauf der Steuerung für die zwangskommutierten Stromrichterventile 1, ... , 4 ist darunter in Fig. 3d wiedergegeben, wobei die schraffierten Bereiche jeweils den Zeitraum bezeichnen, in dem das entsprechende Stromrichterventil durchgeschaltet ist. Zum Zeitpunkt $t_2$ werden z. B. die beiden Stromrichterventile 1 und 4 gleichzeitig durchgeschaltet, so daß von diesem Zeitpunkt an gemäß der Festlegung aus Fig. 1 zunächst ein positiver Kompensationsstrom $\Delta I$ am Wechselspannungseingang 19 und zugleich durch die Glättungsdrossel 10 fliesst. Im Zeitpunkt $t'_2$ wird das Stromrichterventil 1 ab- und dafür das Stromrichterventil 2 durchgeschaltet, während das Stromrichterventil 4 unverändert leitend bleibt. Der Kompensationsstrom $\Delta I$ ist bis zum erneuten Durchschalten von Stromrichterventil 1 Null. Die durchgeschalteten Stromrichterventile 2 und 4 bilden in dieser Pause des Kompensationsstromes $\Delta I$ einen Freilaufzweig für die Glättungsdrossel 10, die aufgrund der gespeicherten Energie über diesen Freilaufzweig einen Gleichstrom unveränderter Größe treibt. Dieses Wechselspiel von $\Delta I$-Impulsen und Freilaufzeiten wiederholt sich mit der Impulsfrequenz f und wechselnden Tastverhältnissen innerhalb des Zeitintervalls $t_3$-$t_2$, in dem der Kompensationsstrom $\Delta I$ positiv ist. Im angrenzenden Intervall $t_2$-$t_1$ mit negativem Kompensationsstrom $\Delta I$ sind die Rollen der Stromrichterventile 1 und 2 vertauscht: Die negativen Stromimpulse fallen in die Durchschaltzeiten des Stromrichterventils 2, während die Stromrichterventile 1 und 3 zusammen den Freilaufzweig bilden.

Die Fig. 3a-d stellen den Steuerungsablauf für eine induktive Blindstromkomponente $I_B$ dar. Bei einer kapazitiven Blindstromkomponente sind $I_B$, $U_S$ und I um 180° phasenverschoben. Die positiven $\Delta I$-Impulse fallen dann in das Zeitintervall $t_2$-$t_1$, so daß auch die Steuerzeiten der Stromrichterventile entsprechend vertauscht sind.

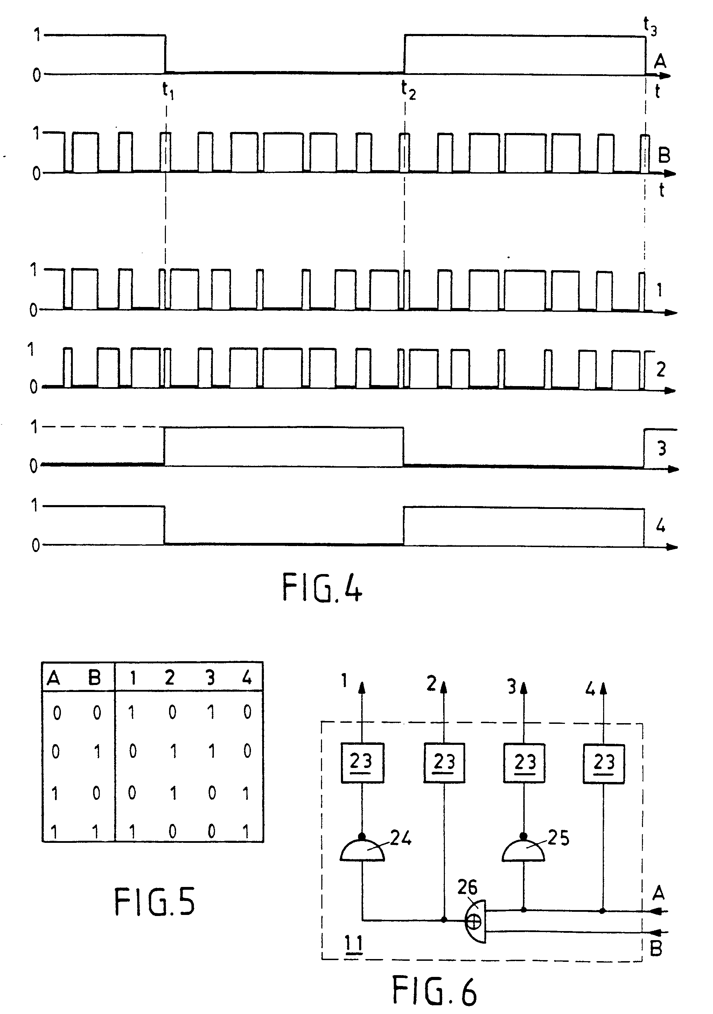

Für einen Steuerungsablauf der zwangskommutierten Stromrichterventile 1, ... , 4 gemäß Fig. 3d werden an den Impulseingängen A und B der Ansteuereinheit geeignete Logikimpulse aus dem Pulslängenmodulator 12 und dem Polaritätsdetektor 22 benötigt. Diese Logikimpulse sind in den beiden oberen Reihen der Fig. 4 dargestellt. Die vom Polaritätsdetektor 22 abgegebene Folge von Logikimpulsen wechselt jeweils beim Polaritätswechsel der Steuerspannung $U_S$ in den Zeitpunkten $t_1$, $t_2$ und $t_3$ von logisch "1" auf logisch "0" bzw. umgekehrt. Die vom Pulslängenmodulator 12 abgegebene Folge besteht aus lauter positiven, sinusförmig längenmodulierten Logikimpulsen. Dies kann z. B. dadurch erreicht werden, dass die Steuerspannung $U_S$ im Pulslängenmodulator 12 zunächst einem Vollweggleichrichter zugeführt und erst anschliessend zur eigentlichen Pulslängenmodulation verwendet wird.

Die Kombination der an den Impulseingängen A und B anstehenden Logikimpulse erfolgt in der Ansteuereinheit 11 gemäss der Wahrheitstabelle aus Fig. 5: Sind beispielsweise beide Impulseingänge A und B auf logisch "0", so wird an die den Stromrichterventilen 1 und 3 zugeordneten Ausgänge eine logische "1" abgegeben, während die Ausgänge für die Stromrichterventile 2 und 4 auf logisch "0" sind. Auf diese Weise werden aus den Eingangsimpulsfolgen von A und B vier verschiedene Ausgangsimpulsfolgen erzeugt, die in den vier unteren Reihen der Fig. 4 wiedergegeben sind, und von denen jede einem Stromrichterventil zugeordnet ist. Jedes Zeitintervall in einer dieser Ausgangsimpulsfolgen aus Fig. 4, in dem das Signal auf logisch "1" steht, entspricht einem schraffierten Durchschaltintervall aus Fig. 3d.

Ein geeigneter Schaltungsaufbau der Ansteuereinheit 11, der die erforderlichen logischen Verknüpfungen gewährleistet, ist in Fig. 6 dargestellt. Die Logikimpulse der Impulseingänge A und B gelangen auf ein XOR-Gatter (exclusiv OR; ausschließliches ODER) 26, dessen Ausgang einerseits direkt über einen Impulswandler 23 zum Steuereingang des Stromrichterventils 2 führt und andererseits über einen ersten Invertierer 24 und einen identischen Impulswandler 23 mit dem Steuereingang des Stromrichterventils 1 verbunden ist. Vom Impulseingang A führen zwei weitere Leitungen über einen zweiten Invertierer 25 und einen Impulswandler 23 bzw. direkt über einen Impulswandler 23 zu den Stromrichterventilen 3 bzw. 4.

Die Impulswandler 23 sind für alle Ausgänge identisch aufgebaut und erzeugen aus den Logikimpulsen. z. B. durch Differentiation, geeignete Ansteuerimpulse für die zwangskommutierten Stromrichterventile 1, ..., 4. Die Ansteuerimpulse sind dabei so beschaffen, dass beim Übergang von logisch "0" auf logisch "1" das zugeordnete Stromrichterventil durchgeschaltet wird, während beim Sprung von logisch "1" auf logisch "0" das Stromrichterventil gelöscht wird. Die schaltungstechnische Ausführung der Impulswandler 23 richtet sich nach den Zünd- und Abschalteigenschaften der verwendeten Stromrichterventile und ist dem Fachmann bekannt.

Insgesamt ergibt sich aus der Erfindung ein Blindleistungskompensator, der bei geringem konstruktiven Aufwand eine schnelle, stetige und flexible Ausregelung der in einem Wechselspannungsnetz auftretenden Blindstromkomponenten ermöglicht.

Die Grösse der Glättungsdrossel 10 und des Kondensators 9 kann dabei umso kleiner gewählt werden, je höher die Impulsfrequenz f liegt. Es ist daher vorteilhaft, diese Impulsfrequenz wesentlich höher als die Frequenz der Netzspannung $U_N$, insbesondere jedoch grösser als 10 kHz, einzustellen. Auf diese Weise wird z. B. bei Abschaltthyristoren, unter Ausnutzung der möglichen Schaltfrequenzen, der Aufwand bei den passiven Bauelementen gering gehalten.

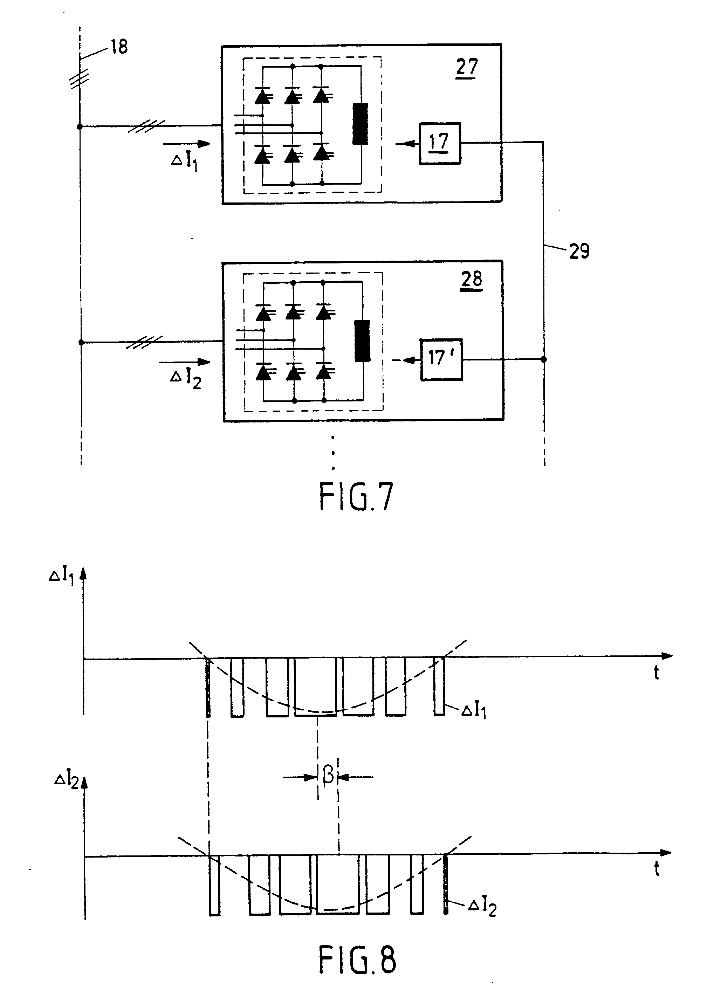

Eine weitere Verringerung des Oberschwingungsgehalts im Kompensationsstrom $\Delta I$ kann dadurch erreicht

werden, daß, wie in Fig. 7 dargestellt, mehrere Stromrichter-Brückenschaltungen 27, 28 parallel an das Wechselspannungsnetz 18 angeschlossen und versetzt getaktet werden. Das Wechselspannungsnetz ist in diesem Fall als Drehstromnetz angedeutet. Entsprechend sind die Stromrichterventile jeder Stromrichter-Brückenschaltung 27, 28 in einer Drehstrom-Vollbrücke angeordnet, wie dies in den gestrichelten Kästen der Fig. 7 andeutungsweise gezeigt ist.

Die einzelnen Stromrichter-Brückenschaltungen 27 und 28 sind dabei aus Redundanzgründen auch hinsichtlich der Ansteuerung gemäß Fig. 1 gleichartig aufgebaut, wobei jedoch zu berücksichtigen ist, dass statt der einphasigen Netzspannung $U_N$ aus Fig. 1 nunmehr die drei verketteten Spannungen des Drehstromnetzes für sich genommen zur Steuerung herangezogen werden.

Jede der Stromrichter-Brückenschaltungen 27 und 28 liefert einen zugehörigen Kompensationsstrom $\Delta I_1$ bzw. $\Delta I_2$ an das Wechselspannungsnetz 18. Die Überlagerung beider Kompensationsströme $\Delta I_1$ und $\Delta I_2$ ergibt dann den resultierenden Kompensationsstrom $\Delta I$.

In Übereinstimmung mit Fig. 1 ist beiden Stromrichter-Brückenschaltungen 27, 28 jeweils ein Pulsfrequenzgenerator 17 bzw. 17' zugeordnet. Beide Pulsfrequenzgeneratoren 17 und 17' erzeugen vorzugsweise dieselbe Impulsfrequenz f. Während in beiden Stromrichter-Brückenschaltungen 27 und 28 alle anderen zur Steuerung verwendeten Spannungen phasengleich sind, besteht zwischen den Impulsfolgen der Pulsfrequenzgeneratoren 17, 17' eine Phasendifferenz in Form eines auf die Impulsfrequenz f bezogenen Versetzungswinkels β (Fig. 8). Dies wird durch eine Synchronisationsleitung 29 erreicht, die beide Pulsfrequenzgeneratoren 17 und 17' verbindet und unter Berücksichtigung des Versetzungswinkels β synchronisiert.

Die Impulsfolgen der Kompensationsströme $\Delta I_1$ und $\Delta I_2$ beider Stromrichter-Brückenschaltungen 27 und 28 sind dann gemäss Fig. 8 ebenfalls um den Versetzungswinkel β, beispielsweise 36°, versetzt. Der Versetzungswinkel β wird vorzugsweise so gewählt, daß bestimmte, besonders starke Überschwingungsfrequenzen im resultierenden Kompensationsstrom durch gegenseitige Aufhebung eine hohe Dämpfung erfahren (bei β = 36° die Oberschwingung mit 5-facher Grundfrequenz).

Durch Hinzufügen weiterer, ebenfalls versetzt getakteter Stromrichter-Brückenschaltungen und geeignete Wahl der verschiedenen Versetzungswinkel können mehrere Oberschwingungen mit unterschiedlicher Frequenz weitgehend unabhängig voneinander beeinflußt werden. Die Wahl der Versetzungswinkel kann dabei nach Maßgabe einer Fourierzerlegung der Kompensationsstromimpulse von jedem

Fachmann in einfacher Weise ausgeführt werden.

**Patentansprüche**

1. Blindleistungskompensator zur Kompensation einer Blindstromkomponente in einem Wechselspannungsnetz
a) mit einer Stromrichter-Brückenschaltung (1 - 4; 27, 28) mit einem an das Wechselspannungsnetz (18) anzuschliessenden Wechselspannungseingang (19) und einem Gleichstromausgang (20),
b) mit zwangskommutierten Stromrichterventilen (1 - 4) in allen Brückenzweigen der Stromrichter-Brückenschaltung, die so angeordnet sind, daß sich am Gleichstromausgang (20) eine festgelegte Stromrichtung ergibt,
c) mit einem zum Wechselspannungseingang (19) parallelgeschalteten Kondensator (9) und
d) einer Glättungsdrossel (10) am Gleichstromausgang (20) als Abschluß,
e) mit einer Ansteuereinheit (11) zur Ansteuerung der zwangskommutierten Stromrichterventile (1 - 4) und
f) einem damit verbundenen Pulslängenmodulator (12),
g) der mit einer Impulsfrequenz (f), die größer als die Frequenz des Wechselspannungsnetzes (18) ist,
h) nach Maßgabe einer von Betrag und Phase der Blindstromkomponente ($I_B$) abhängigen Steuerspannung ($U_S$) längenmodulierte, näherungsweise rechteckige Stromimpulse ($\Delta I$, $\Delta I_1$, $\Delta I_2$) zum Steuern des Kommutierungsvorganges an die Austeuereinheit (11) abgibt, derart, daß die Grundschwingung des Kompensationsstroms ($\Delta I$) gegenüber der Blindstromkomponente ($I_B$) in Frequenz und Amplitude gleich, in der Phase dagegen um 180° verschoben ist,
dadurch gekennzeichnet,
i) daß zur Erzeugung einer sinusförmigen Steuerspannung ($U_S$) ein erster Multiplikator (13) vorgesehen ist, der eine gegenüber der Netzspannung ($U_N$) des Wechselspannungsnetzes (18) um einen Winkel von 90° phasenverschobene Referenzspannung ($U_R$) oder eine verstärkte Referenzspannung (a · $U_R$) mit einem Multiplikationsfaktor (M) multipliziert, dessen Betrag proportional zum Betrag der Blindstromkomponente ($I_B$) ist, und der beim Wechsel der Blindstromkomponente ($I_B$) zwischen induktivem und kapazitivem Bereich sein Vorzeichen wechselt.

2. Blindleistungskompensator nach Anspruch 1, dadurch gekennzeichnet, daß die Referenzspannung ($U_R$) der Netzspannung ($U_N$) nacheilt und von der Netzspannung ($U_N$) mittels eines Phasenschiebers (8) abgeleitet ist.

3. Blindleistungskompensator nach Anspruch 2, dadurch gekennzeichnet, dass zur Erzeugung des Multiplikationsfaktors (M) ein zweiter Multiplikator (16) vorgesehen ist, von dem ein Eingang über einen invertierenden Verstärker (15) mit dem Ausgang des Phasenschiebers (8) verbunden ist, und dessen anderer Eingang mit einer Strommesseinrichtung (6) verbunden ist, die den durch einen am Wechselspannungsnetz (18) liegenden Verbraucher (5) fließenden Verbraucherstrom (I) misst und ein dem Verbraucherstrom (I) in Betrag und Phase entsprechendes Wechselspannungssignal an den zweiten Multiplikator (16) abgibt.

4. Blindleistungskompensator nach einem der Ansprüche 1 bis 3,
dadurch gekennzeichnet,

a) daß mehrere gleichartige Stromrichter-Brückenschaltungen (27, 28) wechselstromseitig phasenweise parallelgeschaltet und

b) gleichstromseitig jeweils an eine Gleichstromdrossel (17, 17') angeschlossen sind,

c) daß diese derart parallelgeschalteten Stromrichter-Brückenschaltungen mit derselben Impulsfrequenz (f), jedoch gegeneinander um einen Versetzungswinkel (β) phasenverschoben angesteuert werden und

d) daß der Versetzungswinkel (β) derart gewählt ist, dass der Oberschwingungsgehalt des Kompensationsstromes (ΔI) bei einer Überlagerung der Kompensationsströme (ΔI₁, ΔI₂) parallelgeschalteter Stromrichter-Brückenschaltungen (27, 28) einen Minimalwert annimmt.

5. Blindleistungskompensator nach Anspruch 4, dadurch gekennzeichnet, daß der Versetzungswinkel (β) 36° beträgt.

**Claims**

1. Reactive-power compensator for compensating a reactive-current component in an alternating-voltage system, comprising

a) a current converter bridge bridge circuit (1 - 4; 27, 28) having an alternating-voltage input (19) which is to be connected to the alternating-voltage system (18) and a direct-current output (20),

b) forced-commutation current converter rectifiers (1 - 4) in all branches of the current converter bridge circuit, which rectifiers are arranged in such a manner that a defined current direction is produced at the direct-current output (10),

c) a capacitor (9) which is connected in parallel with the alternating-voltage input (19), and

d) a smoothing choke (10) as termination at the direct-current output (20),

e) a drive unit (11) for driving the forced-commutation current converter rectifiers (1 - 4) and

f) a pulse-width modulator (12) which is connected to this unit and which

g) outputs, with a put se frequency (f) which is greater than the frequency of the alternating-voltage system (18),

h) width-modulated, approximately rectangular current pulses (I, I₁, I₂) for controlling the commutation process as determined by a control voltage (U_S) dependent on the magnitude and phase of the reactive-current component (I_B) to the drive unit (11) in such a manner that the fundamental oscillation of the compensation current (I) is identical in frequency and amplitude with respect to the reactive-current component (I_B) but shifted in phase by 180°, characterized in that

i) for the purpose of generating a sinusoidal control voltage (U_S), a first multiplier (13) is provided which multiplies a reference voltage (U_R), which is phase-shifted by an angle of 90° with respect to the system voltage (U_N) of the alternating-voltage system (18), or an amplified reference voltage (a · U_R) by a multiplication factor (M), the magnitude of which is proportional to the magnitude of the reactive-current component (I_B) and which changes its sign when the reactive-current component (I_B) changes between the inductive and the capacitive range.

2. Reactive-power compensator according to Claim 1, characterized in that the reference voltage (U_R) lags the system voltage (U_N) and is derived from the system voltage (U_N) by means of a phase shifter (8).

3. Reactive-power compensator according to Claim 2, characterized in that, for the purpose of generating the multiplication factor (M), a second multiplier (16) is provided, one input of which is connected via an inverting amplifier (15) to the output of the phase shifter (8) and the other input of which is connected to a current measuring device (6) which measures the load current (I) flowing through a load (5) located at the alternating-voltage system (18) and outputs an alternating-voltage signal, corresponding to the load current (I) in magnitude and phase, to the second multiplier (16).

4. Reactive-power compensator according to one of Claims 1 to 3, characterized in that

a) several similar current converter bridge circuits (27, 28) are connected in parallel phase-by-phase on the alternating-current side and

b) are in each case connected to a direct-current reactor (17, 17') on the direct-current side,

c) that these current converter bridge circuits connected in parallel in this manner are driven with the same pulse frequency (f) but shifted in phase with respect to one another by an offset angle (8) and

d) that the offset angle (8) is selected in such a manner that the content of harmonics of the compensation current (Δ I) assumes a minimum value when the compensation currents (I₁, I₂) of parallel-connected current converter bridge circuits (27, 28) are superimposed.

5. Reactive-power compensator according to Claim 4, characterized in that the offset angle (β) is 36°.

**Revendications**

1. Compensateur de puissance réactive pour la compensation d'une composante de courant réactif dans un réseau à courant alternatif,

a) avec un montage en pont de convertisseurs de courant (1 - 4; 27, 28) avec une entrée (19) à tension alternative à raccorder au réseau à courant alternatif (18) et une sortie (20) à courant continu,

b) avec des convertisseurs de courant (1 - 4) à commutation forcée dans toutes les branches du montage en pont des convertisseurs de courant, qui sont disposés de telle façon qu'à la sortie (20) à courant continu on obtienne une direction de courant prédéterminée,

c) avec un condensateur (9) monté en parallèle sur l'entrée (19) à tension alternative, et

d) avec une bobine de lissage (10) comme terminaison de la sortie (20) à courant continu,

e) avec une unité de commande (11) pour commander les convertisseurs de courant (1 - 4) à commutation forcée, et

f) un modulateur de durée d'impulsion (12) raccordé a celle-ci,

g) lequel, avec une fréquence d'impulsion (f), qui est supérieure à la fréquence du réseau à courant alternatif (18),

h) produit des impulsions de courant ($\Delta I$, $\Delta I_1$, $\Delta I_2$) approximativement rectangulaires, modulées en durée en réponse à une tension de commande ($U_S$) dépendant de la valeur et de la phase de la composante ($I_B$) de courant réactif, destinées à commander le processus de commutation dans l'unité de commande (11), de telle sorte que l'oscillation fondamentale du courant de compensation ($\Delta I$) soit identique en fréquence et en amplitude mais décalée de 180° en phase par rapport à la composante ($I_B$) de courant réactif, caractérisé en ce que

i) pour la production d'une tension de commande ($U_S$) sinusoïdale, il est prévu un premier multiplicateur (13) qui multiplie une tension de référence ($U_R$) déphasée d'un angle de 90° par rapport à la tension du réseau ($U_N$) du réseau à courant alternatif (18) ou une tension de référence amplifiée ($a \cdot U_R$), par un facteur de multiplication (M) dont la valeur est proportionnelle à la valeur de la composante ($I_B$) de courant réactif et qui change son signe lorsque la composante ($I_B$) de courant réactif passe du domaine inductif au domaine capacitif.

2. Compensateur de puissance réactive suivant la revendication 1, caractérisé en ce que la tension de référence ($U_R$) est en retard de phase par rapport à la tension du réseau ($U_N$) et est dérivée de la tension du réseau ($U_N$) au mon d'un déphaseur (8).

3. Compensateur de puissance réactive suivant la revendication 2, caractérisé en ce que pour produire le facteur de multiplication (M), il est prévu un second multiplicateur (16) dont une entrée est raccordée à la sortie du déphaseur (8) via un amplificateur inverseur (15) et dont l'autre entrée est raccordée à un ampèremètre (6) qui mesure le courant d'utilisation (I) circulant à travers un utilisateur (5) branché sur le réseau à courant alternatif (18) et fournit au second multiplicateur (16) un signal de tension alternative correspondant en valeur et en phase au courant d'utilisation (I).

4. Compensateur de puissance réactive suivant l'une ou l'autre des revendications 1 à 3, caractérisé en ce que

a) plusieurs montages en pont (27, 28) de convertisseurs de courant, constitués de manière identique, sont montés en parallèle et en phase du côté du courant alternatif et

b) sont chacun raccordés à une bobine d'arrêt (17, 17') à courant continu du côté du courant continu,

c) ces montages en pont de convertisseurs de courant, ainsi montés en parallèle, sont commandés avec la même fréquence d'impulsion (f) mais avec un déphasage d'angle ($\beta$) l'un par rapport à l'autre, et

d) l'angle de déphasage ($\beta$) est choisi de telle façon que la proportion d'harmoniques du courant de compensation ($\Delta I$), en cas de superposition des courants de compensation ($\Delta I_1$, $\Delta I_2$) des montages en pont (27, 28) de convertisseurs de courant, montés en parallèle, prenne une valeur minimale.

5) Compensateur de puissance réactive suivant la revendication 4, caractérisé en ce que l'angle de déphasage ($\beta$) vaut 36°.

FIG.1

FIG.2

1

FIG.3a

FIG.3b

FIG.3c

FIG.3d

FIG.4

FIG.5

FIG.6

FIG.7

FIG.8